# EUROPÄISCHE PATENTANMELDUNG

(11) **EP 0 635 231 A1**
(43) Veröffentlichungstag der Anmeldung: **25.01.1995**
(21) Anmeldenummer: 94810423.7
(22) Anmeldetag: 19.07.1994
(51) Int. Cl.: A47J 31/40

(54) **Mechanisches Schnittstellenorgan zwischen einer Kaffeemaschine und einem Transportband, Behältnis mit einer mechanischen Schnittstelle sowie Transportband für Portionen gemahlenen Kaffees**

(30) Priorität: 21.07.1993 DE 4324468; 07.07.1994 CH 2172/94
(71) Anmelder: COSMEC S.r.l., I-24059 Urgnano, Bergamo (IT)
(72) Erfinder: Ackermann, Anton, CH-4855 Wolfwil (CH)
(74) Vertreter: Rottmann, Maximilian R.

(57) **Zusammenfassung**

Um Portionen gemahlenen Kaffees (36, 37), welche mittels eines Transportbands (34) verbunden sind, definiert und vollautomatisch einer Kaffeemaschine zuführen zu können, wird ein mechanisches Schnittstellenorgan (1) vorgeschlagen, welches einen Transportbandabschnitt (34) in einer definierten Position fixiert. Das Schnittstellenorgan (1) wird durch zwei Funktionseinheiten gebildet, wovon die eine an einem Behältnis (45) mit den darin aufgenommenen Portionen gemahlenen Kaffees (36, 37) befestigt ist. Die andere Funktionseinheit ist als Aufnahmerahmen (17) ausgebildet und mit der ersten Funktionseinheit koppelbar. Das mechanische Schnittstellenorgan (1) ist zudem mit Positionierelementen(27, 28) zum definierten Fixieren an einer Kaffeemaschine versehen. Im weiteren wird ein Behältnis (45), zur Aufnahme einer Mehrzahl von Kaffeeportionen (36, 37) mit einem mechanischen Schnittstellenorgan (1) vorgeschlagen, sowie ein Transportband (34), welches mit einem mechanischen Schnittstellenorgan (1) zusammenzuarbeiten bestimmt ist.

## Beschreibung

Die Erfindung betrifft ein mechanisches Schnittstellenorgan zur Bildung einer Schnittstelle zwischen einer Kaffeemaschine und einem Transportband nach dem Oberbegriff des Anspruchs 1, ein Behältnis mit einem mechanischen Schnittstellenorgan zur Aufnahme einer Mehrzahl von mittels eines Transportbandes verbundenen Portionen gemahlenen Kaffees nach dem Oberbegriff des Anspruchs 17 sowie eine Transportband für Portionen gemahlenen Kaffees nach dem Oberbegriff des Anspruchs 24.

Für die Herstellung eines Kaffeegetränks wird üblicherweise ein Pulver aus gemahlenen Kaffeebohnen verwendet. Um dieses Kaffeepulver aufzubrühen, werden oft halbautomatische oder vollautomatische Espressomaschinen eingesetzt, welche das Kaffeepulver unter Druck aufbrühen, wobei vollautomatische Espressomaschinen im allgemeinen über ein integriertes Mahlwerk zum Mahlen der Kaffeebohnen verfügen. Auch das Herstellen von Filterkaffee durch Aufbrühen von in einem Filterpapier aufgenommenem Kaffeepulver ist bekannt.

Bei halbautomatischen Espressomaschinen wird einem Filterhalter eine bestimmte Menge Kaffeepulver mittels eines Dosierbechers zudosiert. Dieses Kaffeepulver wird anschliessend durch unter Druck stehendes, heisses Wasser zu einem Kaffeegetränk aufgebrüht. Eine weitere Variante zur Zubereitung eines Kaffees auf einer solchen halbautomatischen Espressomaschine besteht darin, dass anstelle der Zudosierung mittels eines Dosierbechers eine bereits abgemessene Kaffeeportion verwendet wird. Solche Kaffeeportionen bestehen aus fertig gemahlenem Kaffee, welcher in einer Portionenpackung eingeschlossen ist, wobei die Portionenpackungen selber unterschiedlich ausgebildet sein können. Beispielsweise sind Portionenpackungen aus Kunststoffolien, Metallfolien, Filterpapier und dergleichen sowie aus Kombinationen dieser Materialien bekannt.

Der Vorteil von vorverpackten Kaffeeportionen besteht darin, dass die Kaffeemenge bereits exakt vordosiert und mittels professionellen Mahlwerken auf die gewünschte Korngrösse gemahlen ist. Ein weiterer wesentlicher Vorteil ist, dass die Kaffeemaschine nur einer geringen Verschmutzung unterliegt, da das Kaffeepulver nicht direkt mit Teilen der Kaffeemaschine in Berührung kommt.

Nachteilig ist, dass die Kaffeeportionen aufwendig verpackt sein müssen, da jede einzelne Kaffeeportion hermetisch dicht eingeschlossen sein muss. Dadurch kommt ein Kaffeegetränk letztlich wesentlich teurer als mit herkömmlichen Methoden zu stehen. Auf der Basis von einzelnen, vorverpackten Kaffeeportionen kann eine vollautomatische Kaffeemaschine zudem nur mit sehr grossem Aufwand realisiert werden, da insbesondere eine Zufuhrmechanik für einzelne Kaffeeportionen sehr aufwendig ist. Zudem müssen die hermetisch dicht verpackten Portionen vor dem Aufbrühvorgang geöffnet werden. Andererseits besteht bei nicht hermetisch dicht verpackten Kaffeeportionen die Gefahr, dass durch die umgebende Luft bzw. deren Feuchtigkeit das Aroma des gemahlenen Kaffees bereits nach kurzer Zeit verloren geht bzw. gegangen ist.

Aus der EP-PS 0 041 657 ist eine Espressomaschine bekannt, welche auf einem Band angeordnete Kaffeeportionen über eine Transportrolle einzieht und daraus in einer Brühkammer ein Kaffeegetränk aufbrüht. Die frischen Kaffeeportionen werden in einem dafür vorgesehenen, ersten Behälter aufbewahrt, währenddem die ausgelaugten Portionen einem zweiten Behälter zugeführt werden. Aus der einzigen Zeichnung dieser Patentschrift ist weder ersichtlich, wie der Behälter für die frischen Kaffeeportionen ausgebildet ist, noch wie der Anfang des Bandes in die Kaffeemaschine und in deren Transportorgan eingeführt wird. Ersichtlich ist lediglich, dass beim Aufbrühen eines Kaffeegetränks zumindest die zwei nachfolgenden Kaffeeportionen nicht mehr im ersten Behälter aufgenommen sind. Das bedeutet, dass zumindest diese zwei Kaffeeportionen, insbesondere bei langen Zubereitungsintervallen, ihres Aromas grösstenteils verlustig gehen. Da auch nicht ersichtlich ist, wie der Bandanfang in das Transportorgan eingeführt wird, muss angenommen werden, dass dies von Hand geschieht. Zwischen den einzelnen Kaffeeportionen muss zudem, wie eingezeichnet, ein relativ grosser Abstand vorhanden sein, damit nur jeweils eine Kaffeeportion in den Bereich der Brühkammer zu liegen kommt und der ganze Einzieh- und Aufbrühvorgang auf diese Weise zufriedenstellend funktioniert. Dies wiederum bedeutet, dass durch das Band selbst relativ viel Platz im Behälter eingenommen wird. Aus erwähnter Darstellung ist schliesslich auch nicht ersichtlich, wie die exakte Positionierung der einzelnen Kaffeeportion in die Brühkammer erfolgt.

Es ist daher die Aufgabe der Erfindung, ein mechanisches Schnittstellenorgan zur Bildung einer Schnittstelle zwischen einer Kaffeemaschine und einem Transportband, mit welchem eine Mehrzahl von Portionen von gemahlenem Kaffee verbunden sind, vorzuschlagen, mit Hilfe dessen ein einfaches bzw. vollautomatisches Einführen des Transportbandes in eine Kaffeemaschine bzw. in ein Mitnehmerorgan derselben ermöglicht wird.

Diese Aufgabe wird durch die im Kennzeichen des Patentanspruchs 1 definierten Merkmale gelöst.

Durch ein mechanisches Schnittstellenorgan, welches Mittel zum Fixieren und Positionieren eines Transportbandabschnitts aufweist, wird die Voraussetzung geschaffen, dass ein an der Kaffeemaschine vorhandenes Mitnehmerorgan das Transportband erfassen und bewegen kann, ohne dass zuvor das Band von Hand eingefädelt bzw. in das Mitnehmerorgan eingeführt werden muss.

Weitere vorteilhafte Ausführungsformen des mechanischen Schnittstellenorgans sind in den abhängigen Ansprüchen 2 bis 16 definiert.

So sind bei einer vorteilhaften Ausführung des Schnittstellenorgans Nocken vorgesehen, welche mit am Transportband vorhandenen Ausnehmungen zusammenzuarbeiten bestimmt sind, wobei zwischen den Nocken Ausnehmungen vorhanden sind, welche ermöglichen, dass durch diese Ausnehmungen ein Mitnehmerorgan den fixierten und positionierten Transportbandabschnitt erfasst und diesen zusammen mit einer Portion gemahlenen Kaffees bewegt.

Bei einer weiteren, bevorzugten Ausführung des Schnittstellenorgans ist vorgesehen, letzteres in zwei Funktionseinheiten aufzuteilen. Diese Aufteilung in zwei Funktionseinheiten ist darum sinnvoll, da auf diese Weise eine für den Einmalgebrauch bestimmte, einfache und günstig herzustellende Funktionseinheit geschaffen werden kann, welche vorzugsweise direkt mit einem das Transportband aufnehmenden Behältnis verbunden bzw. an diesem angeformt werden kann, währenddem die andere Funktionseinheit die komplexeren und teureren Teile umfasst, welche vorzugsweise so ausgebildet sind, dass diese mehrmals verwendet werden können. Die am Behältnis fixierte Funktionseinheit braucht dabei lediglich einen Transportbandabschnitt in einer bestimmten Position zu fixieren und verteuert die gesamte Verpackungseinheit nur unwesentlich.

Eine weitere Aufgabe der Erfindung besteht darin, ein Behältnis mit einem mechanischen Schnittstellenorgan vorzuschlagen, welches so ausgebildet ist, dass eine Mehrzahl von Portionen gemahlenen Kaffees darin aufgenommen und einfach daraus entnommen werden können.

Diese Aufgabe wird durch die im Kennzeichen des Anspruchs 17 definierten Merkmale gelöst.

Vorteilhafte Ausführungsformen des Behältnisses sind in den abhängigen Ansprüchen 18 bis 23 umschrieben.

Bei einer bevorzugten Ausführungsform des Behältnisses ist vorgesehen, dass die erste Funktionseinheit am Behältnis angeordnet und von einer Ruhestellung in eine Wirkstellung bringbar und in letzterer fixierbar ist, wobei die Funktionseinheit in der Ruhestellung nicht oder nur unwesentlich über das Behältnis hinausragt und wobei die Funktionseinheit bzw. die Mittel zum Fixieren eines Transportbandabschnitts, in der Wirkstellung der Funktionseinheit über das Behältnis hinausragen. Auf diese Weise wird ein Behältnis geschaffen, dessen Platzbedarf gering ist. Zudem wird die am Behältnis angeordnete, erste Funktionseinheit dadurch nicht exponiert und damit auch nicht unnötig der Gefahr einer Beschädigung ausgesetzt. Sobald die erste Funktionseinheit in die Wirkstellung gebracht wird, ist auch der daran fixierte Bandabschnitt für ein entsprechendes Mitnehmerorgan zugänglich.

Eine weitere Aufgabe der Erfindung besteht darin, ein Transportband für Portionen gemahlenen Kaffees vorzuschlagen, mittels welchem die einzelnen Portionen definiert erfasst und bewegt werden können.

Diese Aufgabe wird durch die im Kennzeichen des Anspruchs 24 definierten Merkmale gelöst.

Weitere vorteilhafte Ausführungsformen des Transportbandes sind in den abhängigen Ansprüchen 25 bis 32 definiert.

Durch die erfindungsgemäss vorgeschlagenen, gruppenweise angeordneten Ausnehmungen im Transportband, welche jeweils einer Portion gemahlenen Kaffees zugeordnet sind, kann ein Transportbandabschnitt bzw. eine Kaffeeportion in einer definierten Stellung fixiert und positioniert werden. Ausserdem kann in diese Ausnehmungen ein an der Kaffeemaschine angeordnetes Mitnehmerorgan eingreifen und dadurch das Transportband definiert und praktisch ohne Schlupf vorwärts bewegen.

Eine bevorzugte Ausführungsform des Transportbandes sieht jeweils zwischen zwei Kaffeeportionen eine Perforation vor. Diese Perforation dient dem definierten Abtrennen des Transportbandes. Dadurch können die einzelnen Kaffeeportionen sehr nahe beieinander angeordnet werden, da nach dem Abtrennen der jeweiligen ersten Kaffeeportion ein genügend grosser Abstand zur nächsten Kaffeeportion gewährleistet ist. Ausserdem können auf diese Weise die Portionen einzeln aus einem Behältnis entnommen werden.

Im folgenden wird ein Ausführungsbeispiel der Erfindung anhand von Zeichnungen näher erläutert. In den Zeichnungen zeigen:
- Fig. 1: eine erste Funktionseinheit eines mechanischen Schnittstellenorgans in einer Frontansicht;
- Fig. 2: die erste Funktionseinheit in einer Seitenansicht;
- Fig. 3: die erste Funktionseinheit in einer Draufsicht;
- Fig. 4: eine als Aufnahmerahmen ausgebildete, zweite Funktionseinheit des mechanischen Schnittstellenorgans in einer Frontansicht;
- Fig. 5: den Aufnahmerahmen in einer Seitenansicht;
- Fig. 6: den Aufnahmerahmen in einer Draufsicht;
- Fig. 7: eine Draufsicht auf ein Transportband mit entlang des Transportbandes angeordneten Kaffeeportionen;
- Fig. 8: einen Längsschnitt durch ein Behältnis mit daran angeordneter, erster Funktionseinheit sowie darin aufgenommenen Portionen von gemahlenem Kaffee; und
- Fig. 9: einen Längsschnitt durch die zweite Funktionseinheit sowie das Behältnis der Fig. 8, wobei letzteres in der Funktionseinheit aufgenommen ist.

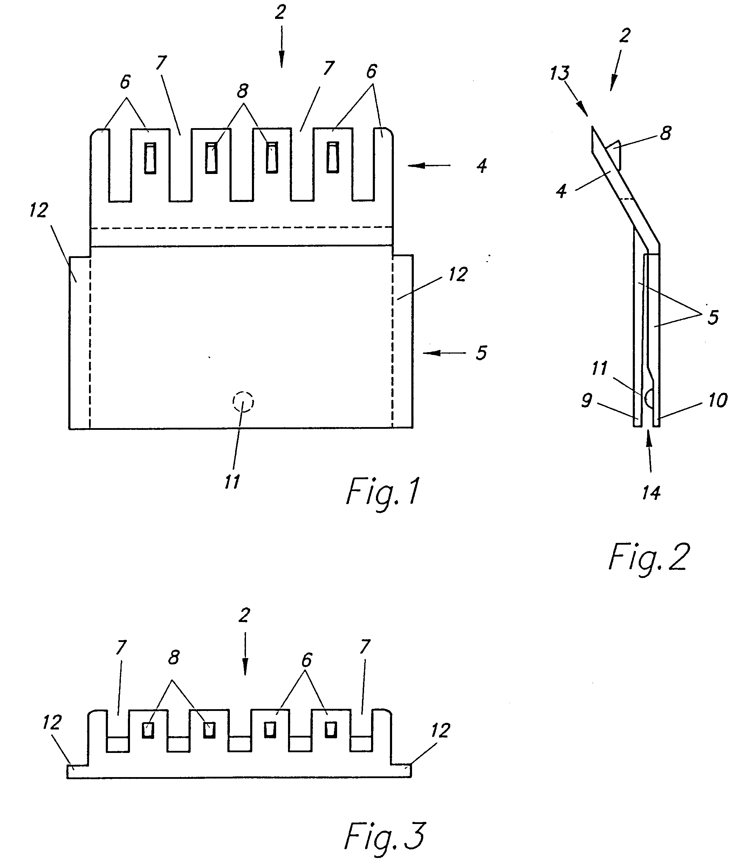

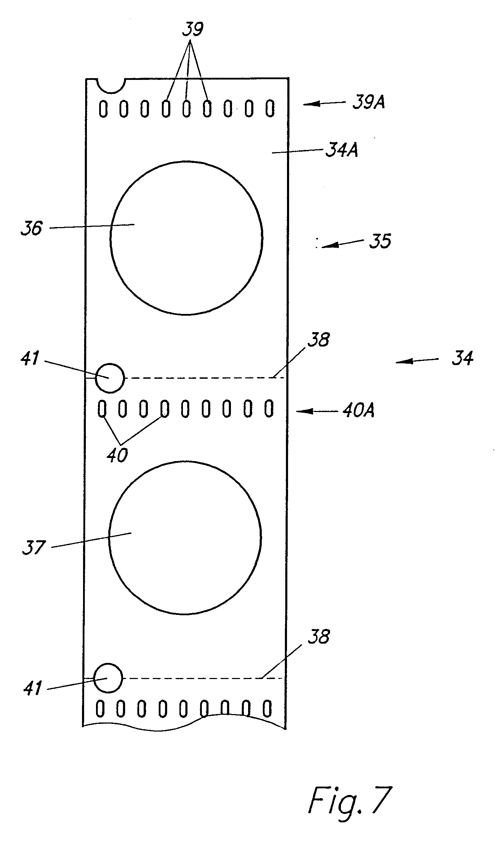

In den Figuren 1 bis 3 ist die erste Funktionseinheit 2 des mechanischen Schnittstellenorgans in einer Frontansicht, einer Seitenansicht und in einer Draufsicht dargestellt. Die Funktionseinheit 2 weist ein rechenförmig ausgebildetes Oberteil 4 sowie ein geschlitztes Unterteil 5 auf, wobei die beiden Teile 4, 5 gegeneinander abgewinkelt sind. Das Oberteil 4 besteht aus einer Mehrzahl von Stegen 6 mit dazwischen liegenden Ausnehmungen 7, wobei an vier Stegen 6 des Oberteils Nocken 8 angeformt sind, welche in einer Reihe liegen. Der Abstand zwischen zwei benachbarten Nocken 8 entspricht dem doppelten Mitten-Abstand zwischen zwei benachbarten Transportöffnungen eines Transportbands, welches nachfolgend anhand der Fig. 7 noch näher erläutert wird.

Die Stege 6 sind in ihrem Endbereich 13 scharfkantig ausgebildet. Durch den Schlitz 14 im Unterteil 5 wird dieses in zwei federnde, zungenförmig ausgebildete Teile 9, 10 unterteilt. Am einen dieser Teile 10 ist zudem eine Erhebung 11 in Form einer Rastnase angeformt. Das Unterteil 5 ist auf beiden Seiten mit zwei formstabilen Seitenteilen 12 versehen, welche der Fixierung dieser Funktionseinheit 2 dienen. Anzumerken ist, dass die gesamte erste Funktionseinheit 2 formstabil ausgebildet ist, so dass die Nocken 8 gegenüber den Seitenteilen 12 eine vorbestimmte Position einnehmen.

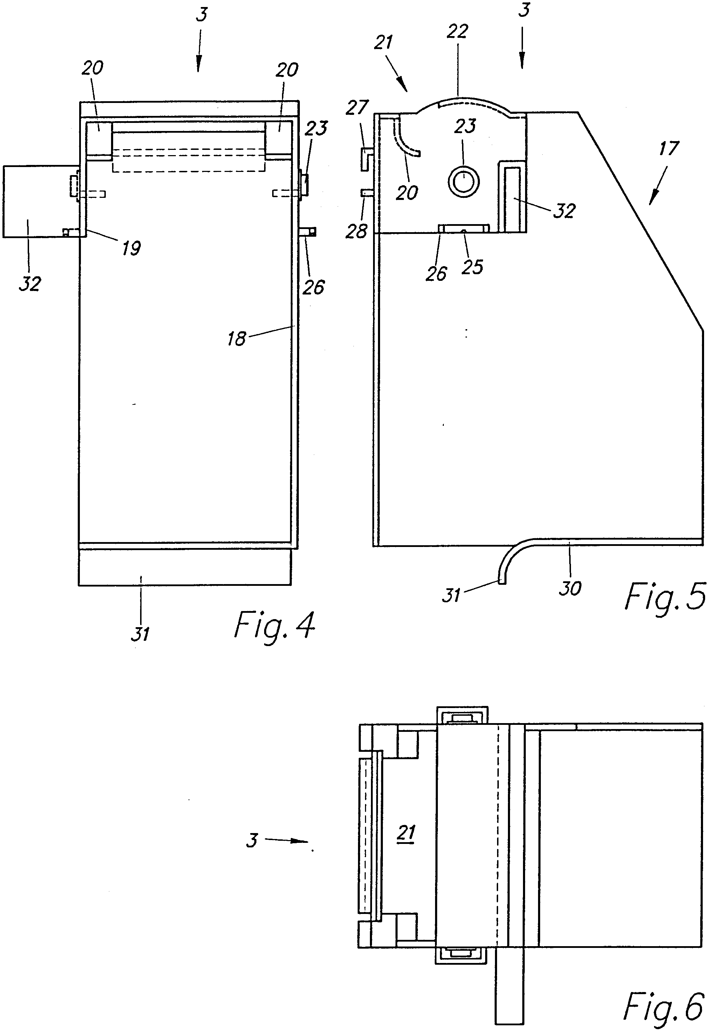

In den Figuren 4 bis 6 ist die zweite Funktionseinheit 3 der mechanischen Schnittstellenorgan in einer Frontansicht, einer Seitenansicht und in einer Draufsicht dargestellt. Diese Funktionseinheit 3 ist als Aufnahmerahmen 17 zur Aufnahme eines Behältnisses ausgebildet, wobei am Aufnahmerahmen 17 Positionierelemente 20 angeordnet sind, an welchen die erste Funktionseinheit definiert angekoppelt werden kann und wobei der Aufnahmerahmen 17 im weiteren über Fixierelemente 27, 28 verfügt, mittels welchen dieser in einer Kaffeemaschine fixiert werden kann. Der Aufnahmerahmen 17 ist mit einer Bodenplatte 30 und einer Seitenwand 18 versehen. Die der Seitenwand 18 gegenüberliegende Seite des Aufnahmerahmens 17 ist weitgehend geöffnet und weist lediglich im oberen Bereich eine Platte 19 auf. Auf der Oberseite ist eine Öffnung 21 vorgesehen. Zu beiden Seiten dieser Öffnung 21 sind die Elemente 20 zum Fixieren und Positionieren der ersten Funktionseinheit angeordnet, welche Elemente 20 auf der Vorderseite gebogen sind. Im weiteren ist eine kreisbogenförmig ausgebildete Abdeckplatte 22 angeordnet, welche sich an die Öffnung 21 anschliesst. Auf beiden Seiten des Aufnahmerahmens 17 ist je ein Lagerelement 23 zur drehbaren Abstützung eines Verschlussbügels angeordnet. Um den Verschlussbügel mittels einer Feder vorspannen zu können, sind zu beiden Seiten des Aufnahmerahmens je ein Bügel 26 mit einem Haken 25 vorgesehen, an welchem die Feder eingehängt werden kann. An seiner vorderen Stirnseite weist der Aufnahmerahmen 17 die Fixierelemente 27, 28 auf, mittels welchen dieser an einer Kaffeemaschine positioniert und fixiert werden kann. Die Bodenplatte 30 des Aufnahmerahmens 17 ist an ihrem vorderen Ende 31 abgerundet ausgebildet. Im weiteren ist noch ein Hangriff 32 vorgesehen. Denkbar wäre auch, dass diese Funktionseinheit 3 als Bestandteil einer Kaffeemaschine ausgebildet würde, wobei die Funktionseinheit 3 fest mit der Kaffeemaschine verbunden oder als Einschubmodul ausgebildet sein könnte. Auch wäre es denkbar, den Aufnahmerahmen auf Auszugsschienen an der Kaffeemaschine zu befestigen.

Figur 7 zeigt einen Ausschnitt 35 eines Transportbandes 34 mit darauf angeordneten Kaffeeportionen 36, 37 in einer Ansicht von oben. Der Transportbandanfang ist mit 34A bezeichnet. Das Transportband 34 ist einstückig ausgebildet und aus einem wasserdurchlässigen, lebensmittelneutralen, vorzugsweise biologisch abbaubaren Material hergestellt. Als Ausgangsmaterial kommt dafür beispielsweise Zellstoff in Frage. Die einzelnen aus gemahlenem Kaffee bestehenden Kaffeeportionen 36, 37 werden vom Transportband 34 komplett umschlossen. Das Transportband 34 weist jeweils zwischen zwei Kaffeeportion 36, 37 eine Perforation 38 auf.

Vor jeder Kaffeeportion 36, 37 sind jeweils gruppenweise angeordnete Ausnehmungen 39, 40 in das Transportband 34 eingelassen, wobei eine Gruppe 39A; 40A von Ausnehmungen 39; 40 jeweils einer Kaffeeportion 36; 37 zugeordnet ist. Die Ausnehmungen 39, 40 einer Gruppe 39A, 40A sind jeweils in einer Reihe quer zur Längsausdehnung des Transportbandes 34 angeordnet.

Von den hier eingezeichneten neun Ausnehmungen 39, 40 einer Gruppe 39A, 40A korrespondieren deren vier mit den an den Stegen der ersten Funktionseinheit angebrachten Nocken 8 (Fig. 1 bis 3). Hinter jeder Kaffeeportion 36, 37 ist schliesslich noch eine kreisrunde Öffnung 41 in das Transportband 34 eingelassen, welche einen Rückfluss des aufgebrühten Kaffeegetränks durch das Transportband 34 ermöglicht.

Das Gewicht einer Portion 36, 37 gemahlenen Kaffees beträgt in der Regel zwischen 6 und 9 Gramm. Dabei ist es durchaus denkbar, Transportbänder 34 für unterschiedlich grosse Portionen an gemahlenem Kaffee herzustellen. Dadurch kann auf einfache Art und Weise die Stärke eines Kaffeegetränks variiert werden. Des weiteren sind auch Transportbänder für Portionen von gemahlenem, koffeinfreien Kaffee vorgesehen.

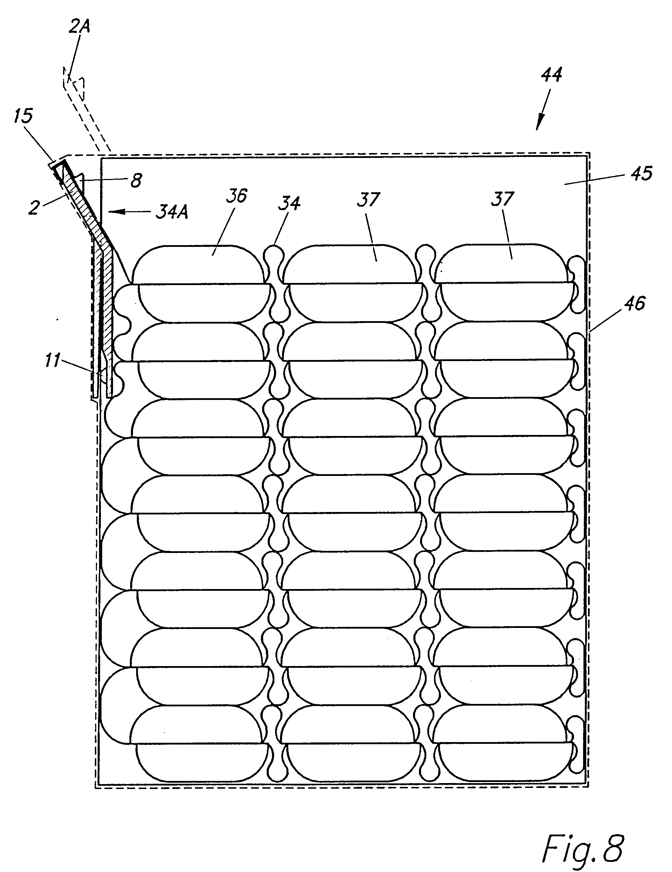

Aus der Figur 8 sind in einer vereinfachten Darstellung die wichtigsten Bestandteile einer aus einem Behältnis 45 und der daran angeordneten ersten Funktionseinheit 2 bestehenden Verpackungseinheit 44 ersichtlich. Die Verpackungseinheit 44 ist im Längsschnitt dargestellt, wobei gleichzeitig in ihr aufgenommene Kaffeeportionen 36, 37 eingezeichnet sind, welche mittels eines in Fig. 7 beschriebenen Transportbandes 34 miteinander verbunden sind. Die Kaffeeportionen 36, 37 sind hintereinander entlang des Transportbandes 34 angeordnet und so in das Behältnis 45 gelegt, dass deren Unterseiten aneinander zu liegen kommen. Um ein sicheres Ausbringen der einzelnen Kaffeeportionen 36, 37 zu gewährleisten, wird das Transportband 34 vorzugsweise in etwa in der hier gezeigten Weise gefaltet.

Die Verpackungseinheit 44 besteht zur Hauptsache aus dem Behältnis 45, der daran angebrachten, ersten Funktionseinheit 2 sowie einer Mehrzahl durch ein Transportband 34 verbundener Kaffeeportionen 36, 37. Die Verpackungseinheit 44 ist in der Figur 8 im Lagerzustand eingezeichnet, in dem sie über einen längeren Zeitraum gelagert werden kann. Dazu ist die erste Funktionseinheit 2 in eine Ruhestellung geschoben, in der diese gegenüber der Wirkstellung nach unten verschoben ist, so dass die erste Funktionseinheit 2 praktisch bündig mit der Oberseite des Behältnisses 45 abschliesst. Dadurch beansprucht die Verpackungseinheit 44 wenig Platz und die erste Funktionseinheit 2 ist nicht exponiert. Um die in der Verpackungseinheit 44 aufgenommenen Portionen gemahlenen Kaffees 36, 37 gegen Luftfeuchtigkeit zu schützen, ist die gesamte Verpackungseinheit 44 von einer hier mittels unterbrochen gezeichneten Linien 46 angedeuteten, mehrlagigen Folie hermetisch dicht abgeschlossen, so dass sich das Aroma der Kaffeeportionen 36, 37 nicht verflüchtigt. Um die Verpackungseinheit 44 bzw. die erste Funktionseinheit 2 in die Wirkstellung zu bringen, wird zuerst die Folie 46 im Bereich der Funktionseinheit 2 entfernt. Danach wird die Funktionseinheit 2 so weit nach oben gezogen, bis deren Rastnase 11 in einer Öffnung am Behältnis 45 einrastet. Durch unterbrochene Linien 2A ist die Wirkstellung der ersten Funktionseinheit 2 angedeutet.

Das Behältnis 45 weist vorzugsweise eine Kartoneinlage auf, welche dem Behältnis 45 die notwendige Stabilität verleiht, die zur Aufnahme desselben in der zweiten Funktionseinheit bzw. zur gegenseitigen Fixierung der beiden Funktionseinheiten 2, 3 erforderlich ist. Zudem ist Karton günstig in der Herstellung und problemlos in der Entsorgung.

Der Anfang 34A des Transportbandes 34 ist mit seinen Öffnungen an den Nocken 8 der ersten Funktionseinheit 2 eingehängt und dadurch fixiert. Um das Transportband 34 im Anfangsbereich 34A während der Lagerung und des Transports der Verpackungseinheit 44 zusätzlich zu fixieren, ist eine über das obere Ende der Funktionseinheit 2 gestülpte Klammer 15 vorgesehen. Anstelle einer Klammer 15 ist es auch denkbar, das Transportband 34 am Anfang 34A beispielsweise durch Klebstoff zu fixieren.

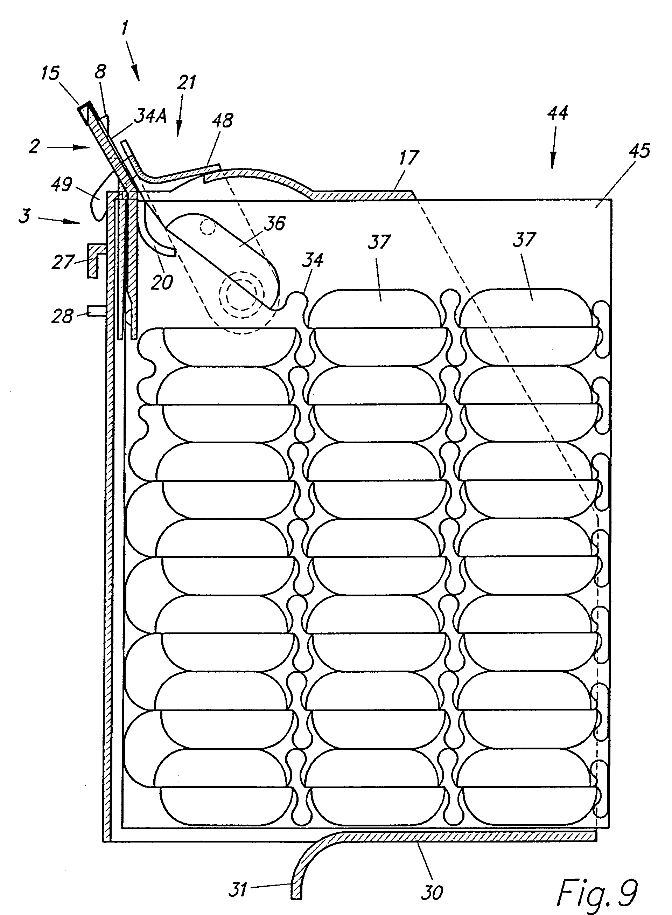

Fig. 9 zeigt schliesslich den betriebsbereiten Zustand sowohl der Verpackungseinheit 44 als auch des durch die beiden Funktionseinheiten 2, 3 gebildeten, mechanischen Schnittstellenorgans 1. Aus dieser Darstellung ist ersichtlich, dass am Aufnahmerahmen 17 ein Verschlussbügel 48 drehbar angeordnet ist, mittels welchem die der Entnahme von Kaffeeportionen 36, 37 dienende Öffnung 21 des Aufnahmerahmens 17 verschliessbar ist. Der Verschlussbügel 48 ist durch zwei hier nicht dargestellte Federn belastet. Durch Drehen des Verschlussbügels 48 über dessen oberen Totpunkt hinweg ist der Verschlussbügel 48 zwischen einer Offen- und eine Schliesstellung verschiebbar, wobei er durch die Federvorspannung in beiden Stellung verharrt. Am Verschlussbügel 48 sind zwei Laschen 49 angeformt, deren Abstand geringfügig grösser ist als die Breite des Transportbandes 34, so dass letzteres durch die beiden Laschen 49 seitlich geführt ist.

Um die beiden Funktionseinheiten 2, 3 miteinander zu koppeln, wird die Verpackungseinheit 44 so in den Rahmen 17 hineingebracht, dass die beiden formstabilen Seitenteile 12 (Fig. 1) der ersten Funktionseinheit 2 hinter die Positionierelemente 20 der zweiten Funktionseinheit 3 zu liegen kommen. Dadurch kommt die eine Funktionseinheit 2 gegenüber der anderen Funktionseinheit 3 in eine definierte Lage zu liegen. Da das Behältnis 45 am Boden 30 des Aufnahmerahmens 17 aufliegt, wird durch dessen Steifigkeit sichergestellt, dass die beiden formstabilen Seitenteile 12 (Fig. 1) an einen oberen Anschlag des Aufnahmerahmens 17 gedrückt und in dieser Position fixiert werden. Bevor die Verpackungseinheit 44 in den Rahmen 17 geschoben wird, wird der Verschlussbügel 48 bevorzugt in die Offenstellung gebracht. Nach dem Koppeln der beiden Funktionseinheiten 2, 3 kann der Aufnahmerahmen 17, und damit die Verpackungseinheit 44 sowie das mechanische Schnittstellenorgan 1, mittels der Positionier- und Fixierelemente 27, 28 an der Kaffeemaschine fixiert werden.

Die Entnahme einer einzelnen Kaffeeportionen 36, 37 aus der Verpackungseinheit 44 durch ein Mitnehmerorgan der Kaffeemaschine stellt sich wie folgt dar: Ein mit fünf einzelnen Erhebungen versehenes Mitnehmerorgan greift durch die Aussparungen 7 der ersten Funktionseinheit 2 in freie Ausnehmungen 39 des Transportbands 34 ein, hebt dieses leicht an und zieht es über die Nocken 8 hinweg zusammen mit einer ersten Portion gemahlenen Kaffees 36 aus der Verpackungseinheit 44 heraus. Der Verschlussbügel 48 weicht dabei entgegen der Federkraft zurück und verschliesst die Entnahmeöffnung 21 hinter der entnommenen Kaffeeportion 36 automatisch wieder, so dass die in der Verpackungseinheit 44 verbleibenden Kaffeeportionen 37 gegen Luftfeuchtigkeit geschützt sind. Ist das Transportband 34 im Anfangsbereich 34A durch eine Klammer 15 fixiert, so muss diese vor dem Einsetzen des Aufnahmerahmens 17 in die Kaffeemaschine entfernt werden, währenddem bei einem durch Klebstoff fixierten Transportbandanfang 34A keine speziellen Massnahmen vorzusehen sind. Das Transportband 34 gleitet während der Entnahme einer Kaffeeportion 36 solange über die Nocken 8 hinweg, bis die vor jeder Kaffeeportion angeordnete Gruppe von Ausnehmungen die Nocken 8 erreicht und letztere wiederum in das Transportband 34 eingreifen und dieses fixieren. Ein sicheres Eingreifen der Nocken 8 in das Transportband 34 wird zudem durch den Verschlussbügel 48 unterstützt. Anschliessend wird das Transportband 34 an der Perforation 38 durchgetrennt. Dabei wird das Transportband 34 vorzugsweise durch an der Kaffeemaschine angeordnete Mittel im Bereich der Nocken 8 fixiert und durch Ziehen am erfassten Transportbandabschnitt durchtrennt. Das Durchtrennen wird zudem durch die scharfen Kanten 13 am oberen Ende der Stege 6 der ersten Funktionseinheit 2 unterstützt, da die Perforation an diesen Kanten anliegt. Natürlich können an der Kaffeemaschine auch Mittel zum Fixieren und/oder Durchtrennen des Transportbands 34 vorgesehen sein.

Die abgerundete Vorderkante 31 des Aufnahmerahmenbodens 30 erleichtert jeweils den Austausch der Verpackungseinheit 44. Gleichzeitig kann diese Vorderkante 31 auch als Anschlag oder als Fixierelement beim Einsetzen des Aufnahmerahmens 17 in die Kaffeemaschine dienen.

Ein grosser Vorteil des vorgängig beschriebenen, mechanischen Schnittstellenorgans 1 liegt darin, dass das Behältnis 45 nach jeder entnommenen Kaffeeportion wieder verschlossen und das Transportband 34 durchtrennt wird. Dies ermöglicht, die im Aufnahmerahmen 17 aufgenommene Verpackungseinheit 44 jederzeit aus der Kaffeemaschine zu entfernen und durch eine andere zu ersetzen. Auf diese Weise kann jederzeit die Kaffeesorte gewechselt werden, unabhängig davon, wie viele Kaffeeportionen 37 noch in der Verpackungseinheit 44 aufgenommen sind.

Denkbar ist auch, dass direkt an der ersten Funktionseinheit 2 Positionier- und/oder Fixierelemente angeformt sind, so dass die Verpackungseinheit 44 direkt an der Kaffeemaschine fixiert werden könnte.

Zu erwähnen ist, dass auch am Verschlussbügel 48 Nocken angeformt werden könnten, welche die Fixierung des Transportbandes 34, zusätzlich oder anstelle der an der ersten Funktionseinheit 2 angeordneten Nocken 8, übernehmen könnten.

Anzumerken ist, dass das vorgängig erläuterte Ausführungsbeispiel lediglich ein mögliche Ausführungsform darstellt, und dass noch eine Vielzahl von anderen Ausführungsformen von mechanischen Schnittstellenorganen, von Behältnissen mit einem mechanischen Schnittstellenorgan und von gattungsgemässen Transportbändern denkbar ist.

## Patentansprüche

1. Mechanisches Schnittstellenorgan (1) zur Bildung einer Schnittstelle zwischen einer Kaffeemaschine und einem Transportband (34), mittels welch letzterem eine Mehrzahl von Portionen von gemahlenem Kaffee (36, 37) verbunden sind, dadurch gekennzeichnet, dass das Schnittstellenorgan (1) Mittel (2) zum Fixieren und Positionieren eines Abschnitts des Transportbands (34A) aufweist.

2. Mechanisches Schnittstellenorgan (1) nach Anspruch 1, dadurch gekennzeichnet, dass dieses ferner einen formstabilen Bereich zum definierten Positionieren eines fixierten und positionierten Transportbandabschnitts (34A) gegenüber einer Kaffeemaschine aufweist.

3. Mechanisches Schnittstellenorgan (1) nach Anspruch 2, dadurch gekennzeichnet, dass der formstabile Bereich Positionier- und/oder Fixierelemente (8, 27, 28) aufweist.

4. Mechanisches Schnittstellenorgan (1) nach einem der vorhergehenden Ansprüche, für ein Transportband (34) mit einer Mehrzahl von Ausnehmungen (39, 40), dadurch gekennzeichnet, dass das Schnittstellenorgan (1), zur Fixierung und Positionierung eines Transportbandabschnitts (34A) an dessen Ausnehmungen (39), mit Nocken (8) versehen ist, welche mit den am Transportband (34) vorhandenen Ausnehmungen (39, 40) zusammenzuarbeiten bestimmt sind, und dass die Nocken (8) auf Stegen (6) angeordnet sind, wobei zwischen den Stegen (6) Aussparungen (7) vorgesehen sind, so dass ein Mitnehmerorgan in freie Ausnehmungen (39, 40) am Transportband (34) eingreifen kann.

5. Mechanisches Schnittstellenorgan (1) nach Anspruch 4, dadurch gekennzeichnet, dass die Nocken (8) in einer Reihe angeordnet sind, und dass der Mitten-Abstand zwischen zwei benachbarten Nocken (8) dem doppelten Mitten-Abstand zwischen zwei benachbarten Transportöffnungen (39, 40) am Transportband (34) entspricht.

6. Mechanisches Schnittstellenorgan (1) nach einem der vorhergehenden Ansprüche, dadurch gekennzeichnet, dass dieses ein federbelastetes Verschlussorgan (48) umfasst, mittels welchem eine Öffnung (21) zum Durchführen des Transportbandes (34) und der Portionen gemahlenen Kaffees (36, 37) verschliessbar ist.

7. Mechanisches Schnittstellenorgan (1) nach Anspruch 6, dadurch gekennzeichnet, dass am Verschlussorgan (48) zwei Laschen (49) angeformt sind, deren Abstand zumindest annähernd der Breite des Transportbandes (34) entspricht, so dass letzteres durch die Laschen (49) seitlich geführt ist.

8. Mechanisches Schnittstellenorgan (1) nach Anspruch 6 oder 7, dadurch gekennzeichnet, dass das Verschlussorgan (48) in seiner die Öffnung (21) verschliessenden Stellung die Fixierung des Transportbandes (34) unterstützt.

9. Mechanisches Schnittstellenorgan (1) nach einem der vorhergehenden Ansprüche, dadurch gekennzeichnet, dass das Schnittstellenorgan (1) zwei Funktionseinheiten (2, 3) umfasst, welche miteinander koppelbar sind.

10. Mechanisches Schnittstellenorgan (1) nach Anspruch 9, dadurch gekennzeichnet, dass die eine, erste Funktionseinheit (2) an einem das Transportband (34) und die Portionen gemahlenen Kaffees (36, 37) aufnehmenden Behältnis (45) fixierbar ist.

11. Mechanisches Schnittstellenorgan (1) nach Anspruch 9 oder 10, dadurch gekennzeichnet, dass die andere, zweite Funktionseinheit (3) einen formstabilen Aufnahmerahmen (17) aufweist, welcher mit Positionierelementen (20) versehen ist, an welchen die erste Funktionseinheit (2) in einer definierten Position ankoppelbar ist.

12. Mechanisches Schnittstellenorgan (1) nach einem der Ansprüche 9 bis 11, dadurch gekennzeichnet, dass die zweite Funktionseinheit (3) fest oder beweglich mit einer Kaffeemaschine verbunden ist.

13. Mechanisches Schnittstellenorgan (1) nach Anspruch 10 oder 11, dadurch gekennzeichnet, dass die erste Funktionseinheit (2) eine Ausnehmung (14) zum Aufstecken auf das Behältnis (45) aufweist, wobei durch die Ausnehmung (14) zwei Zungen (9, 10) gebildet sind.

14. Mechanisches Schnittstellenorgan (1) nach Anspruch 13, dadurch gekennzeichnet, dass zumindest an der einen Zunge (10) zumindest eine Erhebung (11) angeformt ist, mittels welcher die erste Funktionseinheit (2) in einer Wirkstellung fixierbar ist, indem die Erhebung (11) in einer am Behältnis (45) angeordneten Ausnehmung einrastet.

15. Mechanisches Schnittstellenorgan (1) nach einem der Ansprüche 9 bis 14, dadurch gekennzeichnet, dass das Verschlussorgan (48) an der zweiten Funktionseinheit (3) beweglich gelagert ist.

16. Mechanisches Schnittstellenorgan (1) nach einem der Ansprüche 9 bis 15, dadurch gekennzeichnet, dass die eine und/oder die andere Funktionseinheit (2, 3) mit Positionierelementen (27, 28) zum definierten Positionieren und Fixieren des Schnittstellenorgan (1) an einer Kaffeemaschine versehen ist/sind.

17. Behältnis (45) mit einem mechanischen Schnittstellenorgan (1) nach einem der Ansprüche 1 bis 16, dadurch gekennzeichnet, dass das Behältnis (45) zur Aufnahme einer Mehrzahl von mittels eines Transportbandes (34) verbundenen Portionen von gemahlenem Kaffee (36, 37) ausgebildet ist, wobei das Behältnis (45) im betriebsbereiten Zustand eine Entnahmeöffnung (21) zur Entnahme der Portionen von gemahlenem Kaffee (36, 37) aufweist, und wobei zumindest die Mittel (6, 8) zum Positionieren und Fixieren eines Transportbandabschnitts (34A) des mechanischen Schnittstellenorgans (1) im Bereich der Entnahmeöffnung (21) angeordnet sind.

18. Behältnis (45) nach Anspruch 17, dadurch gekennzeichnet, dass die erste Funktionseinheit (2) derart am Behältnis (45) angeordnet ist, dass diese von einer Ruhestellung in eine Wirkstellung bringbar und in letzterer fixierbar ist, wobei die Funktionseinheit (2) in der Ruhestellung nicht oder nur unwesentlich über das Behältnis (45) hinausragt und wobei die Funktionseinheit (2) bzw. die Mittel (6, 8) zum Fixieren eines Transportbandabschnitts (34A), in der Wirkstellung der Funktionseinheit (2) über das Behältnis (45) hinausragen.

19. Behältnis (45) nach Anspruch 17 oder 18, dadurch gekennzeichnet, dass das Behältnis (45) zumindest eine Ausnehmung aufweist, in welcher die Erhebung (11) der ersten Funktionseinheit (2) in der Wirkstellung einrastbar ist.

20. Behältnis (45) nach einem der Ansprüche 17 bis 19, dadurch gekennzeichnet, dass dieses einen die Form stabilisierenden Innenteil aufweist.

21. Behältnis (45) nach einem der Ansprüche 17 bis 20, dadurch gekennzeichnet, dass der Transportbandanfang (34A) an den Positionier- und Fixiermitteln (6, 8) des mechanischen Schnittstellenorgans (1) fixiert ist.

22. Behältnis (45) nach Anspruch 21, dadurch gekennzeichnet, dass der Transportbandanfang (34A) zusätzlich durch eine Klammer (15) und/oder durch die Adhäsion erhöhende Mittel, wie beispielsweise Klebstoffe, fixiert ist.

23. Behältnis (45) nach einem der Ansprüche 17 bis 22, dadurch gekennzeichnet, dass das Behältnis (45) von einer den Inhalt hermetisch dicht verschliessenden Folie (46) umschlossen ist.

24. Transportband (34) für Portionen von gemahlenem Kaffee (36, 37), welches mit einem mechanischen Schnittstellenorgan (1) nach einem der Ansprüche 1 bis 16 zusammenzuarbeiten bestimmt und/oder in einem Behältnis (45) nach einem der Ansprüche 17 bis 23 aufgenommen ist, dadurch gekennzeichnet, dass das Transportband (34) gruppenweise angeordnete Ausnehmungen (39, 40) aufweist, wobei eine Gruppe (39A, 40A) von Ausnehmungen (39, 40) jeweils einer Portion gemahlenen Kaffees (36, 37) zugeordnet ist.

25. Transportband (34) nach Anspruch 24, dadurch gekennzeichnet, dass eine Gruppe (39A, 40A) von Ausnehmungen (39, 40) jeweils in einer Reihe quer zur Längsausdehnung des Transportbandes (34) angeordnet ist.

26. Transportband (34) nach Anspruch 24 oder 25, dadurch gekennzeichnet, dass dieses zwischen den einzelnen Kaffeeportionen (36, 37) jeweils eine Perforation (38) aufweist.

27. Transportband (34) nach einem der Ansprüche 24 bis 26, dadurch gekennzeichnet, dass die Anzahl der Ausnehmungen (39, 40) im Transportband (34) grösser ist als die Anzahl der an der einen Funktionseinheit (2) angebrachten Nocken (8).

28. Transportband (34) nach einem der Ansprüche 24 bis 27, dadurch gekennzeichnet, dass dieses neben den jeweiligen Kaffeeportionen (36, 37) eine weitere, vorzugsweise kreisförmige, Öffnung (41) aufweist.

29. Transportband (34) nach einem der Ansprüche 24 bis 28, dadurch gekennzeichnet, dass dieses einstückig ausgebildet ist, und dass die einzelnen Kaffeeportionen (36, 37) durch das Transportband (34) umschlossen sind.

30. Transportband (34) nach einem der Ansprüche 24 bis 29, dadurch gekennzeichnet, dass das Gewicht einer Portion gemahlenen Kaffees (36, 37) zwischen 6 und 9 Gramm beträgt.

31. Transportband (34) nach einem der Ansprüche 24 bis 30, dadurch gekennzeichnet, dass dieses zumindest im Bereich der Kaffeeportionen (36, 37) wasserdurchlässig ausgebildet ist.

32. Transportband (34) nach einem der Ansprüche 24 bis 31, dadurch gekennzeichnet, dass dieses aus einem lebensmittelneutralen, biologisch abbaubaren Material besteht.
